# EUROPÄISCHE PATENTSCHRIFT

(11) **EP 2 843 206 B1**
(45) Veröffentlichungstag und Bekanntmachung des Hinweises auf die Patenterteilung: **07.11.2018**
(21) Anmeldenummer: 14182371.6
(22) Anmeldetag: 27.08.2014
(51) Int. Cl.: F01N 13/00, B01D 46/24, B01D 46/00, F02M 35/10, F02M 35/02, F02M 35/09, B01D 46/42, B01D 46/44

(54) **Filtersystem mit Sensorstutzen**
Filter system with sensor tip
Système de filtre doté de support de capteur

(30) Priorität: 02.09.2013 DE 102013014491
(43) Veröffentlichungstag der Anmeldung: 04.03.2015
(73) Patentinhaber: MANN + HUMMEL GMBH, 71636 Ludwigsburg (DE)
(72) Erfinder: STEINS, Oliver, 67354 Römerberg (DE); KAUFMANN, Michael, 67149 Meckenheim (DE); RUHLAND, Klaus-Dieter, 67149 Meckenheim (DE)

(56) Entgegenhaltungen:
- WO-A1-2014/084959
- DE-A1-102009 033 261
- US-A1- 2007 160 510

## Beschreibung

### Technisches Gebiet

Die Erfindung betrifft ein Luftfiltersystem mit einem Sensorstutzen, zur Verwendung als Luftfilter einer Brennkraftmaschine.

### Stand der Technik

Aus der DE102009033261A und aus der EP1835166A sind Luftfiltersysteme bekannt, bei denen Anschlussstutzen für Wartungsindikatoren, wie beispielsweise eine Wartungsintervallanzeige, an einem Reinluftauslass angebracht sind, von dem sie rechtwinklig abgehen. Bei der DE102009033261A ist der Auslass fest an einem Filtergehäuse angebracht, während in der EP1835166A der Auslass drehbar im Filtergehäuse gelagert ist. Dadurch kann der Anschlussstutzen für Wartungsindikatoren in eine geeignete Lage gedreht werden, um einen dort anzuschließenden Schlauch oder einen Sensor in einer für die Einbausituation beispielsweise an einer Brennkraftmaschine günstige Position anzubringen. In beiden Fällen ragt ein an dem Anschlussstutzen angebrachter Sensor oder Schlauch durch die rechtwinklige Anordnung des Anschlussstutzens an dem Auslass weit über die Kontur des Gehäuses des Luftfiltersystems hinaus. Dies erfordert einerseits zusätzlichen Bauraum und bringt andererseits die Gefahr mit sich, den Sensor zu beschädigen.

Eine Aufgabe der Erfindung ist es daher, ein kompaktes Luftfiltersystem mit einem Sensorstutzen zu schaffen, bei dem der Sensorstutzen weitgehend beschädigungsarm untergebracht ist.

Die vorgenannten Aufgaben werden nach einem Aspekt der Erfindung gelöst mit einem Luftfiltersystem , das einen am Gehäuse angeordneten Sensorstutzen vorsieht, bei dem der Sensorstutzen schräg zu einer Längsachse des Gehäuses in einem Endbereich des Gehäuses angeordnet ist.

Günstige Ausgestaltungen und Vorteile der Erfindung ergeben sich aus den weiteren Ansprüchen, der Beschreibung und der Zeichnung.

### Offenbarung der Erfindung

Es wird ein Luftfiltersystem vorgeschlagen, wobei das Luftfiltersystem ein Gehäuse mit Gehäusewand und wenigstens einem Deckel, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, sowie einen am Gehäuse angeordneten Sensorstutzen umfasst. Dabei ist der Sensorstutzen schräg zu einer Längsachse des Gehäuses in einem Endbereich des Gehäuses angeordnet.

Die erfindungsgemäße Anordnung eines Sensorstutzens zum Anschluss von beispielsweise Wartungsindikatoren stellt eine besonders bauraumgünstige Lösung dar und ist deshalb besonders beim Einbau von Luftfiltersystemen an Brennkraftmaschinen im Kraftfahrzeugbereich von Bedeutung, wo der Bauraum typischerweise sehr eng begrenzt ist. Besonders bei kleinen Rundluftfiltergehäusen lässt sich die Sensoranschlussschnittstelle, meistens ein Anschlussgewinde, eines Sensorstutzens bei einer rein radialen Anordnung des Anschlussstutzens am Gehäuse nicht in einer Art Kuhle einsenken. Als Folge davon würde ein aufgeschraubter Wartungsindikator komplett außerhalb des Gehäusedurchmessers herausragen. So würde der beanspruchte Bauraum einerseits einen sehr großen Durchmesser aufweisen. Andererseits bestünde auch die Gefahr, dass der Sensorstutzen mit dem Wartungsindikator beim Einbau durch seine vorstehende Position leicht beschädigt werden könnte. Bei der erfindungsgemäßen schrägen Anordnung lässt sich ein Wartungsindikator weitgehend innerhalb der Kontur des Luftfiltersystems unterbringen, sodass der Bauraum gut ausgenutzt wird und der Sensorstutzen nicht übermäßig hervorsteht. Trotzdem kann der Sensor oder Anschlusselemente dazu leicht befestigt, insbesondere eingeschraubt werden.

Eine schräge Anordnung erlaubt es außerdem, einen bereits auf dem Sensorstutzen aufgeschraubten Wartungsindikator beim Handling und/oder beim Transport des Filtersystems bezüglich der Logistik und/oder der Montage beim Kunden besser gegen eine mögliche Beschädigung zu schützen. Auch ist der notwendige Bauraumbedarf in radialer Richtung geringer. Gegenüber einer Lösung, bei der ein Sensorstutzen radial auf dem Auslassstutzen sitzen würde, hat die schräge Anordnung einen Bauraumvorteil in axialer Richtung, weil die Länge des Auslassstutzens bis zum Beginn einer Montagefläche, beispielsweise an einer Brennkraftmaschine, geringer gehalten werden kann. Gegenüber einer axialen Anschlusslösung an einer Stirnfläche des Gehäuses bringt die schräge Anordnung den Vorteil, dass mehr Bauraum zwischen einem auf dem Sensorstutzen montierten Wartungsindikator und dem Auslassstutzen vorhanden ist, der beispielsweise zur Montage eines Gummischlauches mit Schelle zur Luftführung benötigt wird.

Der Sensorstutzen umfasst vorteilhaft einen Anschlusskanal sowie eine außen am Filtergehäuse angeordnete Anschlussschnittstelle, an welcher der Anschlusskanal endet, ein Wartungsindikator anbringbar ist oder eine Verbindungsleitung zu einem solchen. Vorteilhaft wird hierzu ein Gewindeanschluss oder ein Bajonettanschluss verwendet.

Erfindungsgemäß ist der Sensorstutzen benachbart zum Auslassstutzen, der typischerweise Teil der Gehäusewand ist, angeordnet. Auf diese Weise ist es möglich, beispielsweise einen Druckverlust auf Grund der Beladung des Filtersystems durch Schmutzpartikel genau zu messen, da der Druck direkt im Auslasskanal bestimmt werden kann. Ganz besonders vorteilhaft kann der Sensorstutzen am Fußpunkt des Auslassstutzens angeordnet sein. Die Anbringung eines Wartungsindikators kann hier den maßgeblichen Druck zur Wartungsintervallanzeige direkt bestimmen und andererseits kann bei Anbringung des Sensorstutzens an diesem Ort der Bauraum des Gehäuses des Filtersystems günstig ausgenutzt werden.

In einer zweckmäßigen Ausführung kann der Sensorstutzen an einer Gehäusestirnseite angeordnet sein. Bei Anbringung des Sensorstutzens in diesem Bereich kann der zu bestimmende Druck in unmittelbarer Nähe des Auslasses gemessen werden. Außerdem ist es so möglich, dass ein angebrachter Sensor oder ein Wartungsindikator radial nicht über den Umfang des Gehäuses hinausragt.

Vorteilhaft kann der Sensorstutzen unter einem Winkel zwischen 10° und 80°, bevorzugt zwischen 20° und 70°, besonders bevorzugt zwischen 30° und 60°, zu der Gehäusestirnseite angeordnet sein. Ein solcher Winkel gestattet eine günstige Montageposition für das Aufschrauben oder Aufstecken eines Sensors, eines Sensorsteckers oder eines Wartungsindikators. Bei typischen Wartungsintervallanzeigekomponenten kann so ein Abstand zwischen dem montierten Sensor und dem Auslassstutzen von mindestens 10 Millimetern eingehalten werden, was an vibrationsbelasteten Systemen im Kraftfahrzeugbereich üblicherweise als ausreichend angesehen wird.

In einer alternativen Ausführungsform kann der Sensorstutzen auch direkt an dem Auslassstutzen angeordnet sein. Der Auslassstutzen als Teil der Gehäusewand ist ein günstiger Anbringungsort für den Sensorstutzen, da so der für einen Wartungsindikator bestimmende Druck direkt im Auslasskanal gemessen werden kann.

Vorteilhaft kann der Auslassstutzen konzentrisch zu der Längsachse angeordnet und der Sensorstutzen lateral versetzt zu der Längsachse angeordnet sein. Bei Rundfiltergehäusen ist es üblich, den Auslassstutzen in einer symmetrischen Anordnung konzentrisch zu der Längsachse anzubringen. Der Sensorstutzen kann so bei einer schrägen Anordnung radial in Richtung der Längsachse ausgerichtet sein, er kann jedoch auch lateral dazu versetzt angeordnet sein, wenn der Bauraum so günstiger ausgenutzt werden kann.

Eine solche Anordnung kann auch bedeuten, dass der Sensorstutzen lateral versetzt zu einer Achse des Auslassstutzens in einer Wand des Auslassstutzens angeordnet ist. Eine solche Anbringung ermöglicht das Anordnen des Sensorstutzens direkt in der Wand des Auslassstutzens, jedoch nicht symmetrisch zu einer Achse des Auslassstutzens, sondern lateral versetzt dazu. Auch eine solche Anordnung kann aus Bauraumgründen günstig sein und erlaubt es dennoch, den bestimmenden Druck für einen Wartungsindikator direkt im Auslasskanal zu bestimmen.

Vorteilhaft kann ein Anschlusskanal des Sensorstutzens in eine Reinseite des Filtersystems münden. Wird der Sensorstutzen eng benachbart zu dem Auslassstutzen, also beispielsweise direkt am Auslassstutzen oder am Fußpunkt des Auslassstutzens, angeordnet, so kann der Anschlusskanal des Sensorstutzens direkt in den Auslasskanal und damit in die Reinseite, also den Bereich, wo das gefilterte Fluid strömt, münden und damit günstige Messwerte für einen Wartungsindikator zur Verfügung stellen.

Zweckmäßigerweise kann der Sensorstutzen mit dem Gehäuse einstückig und bevorzugt materialeinheitlich ausgeführt sein. Auf diese Weise kann der Sensorstutzen in einem Herstellgang, beispielsweise mittels Kunststoffspritzguss vorgesehen und gefertigt werden, sodass keine zusätzliche Montage oder Abdichtung des Sensorstutzens zum Gehäuse des Filtersystems erforderlich ist. Weiter bevorzugt ist auch der Auslassstutzen des Gehäuses, in dessen Nähe der Sensorstutzen bevorzugt angeordnet ist, ebenfalls einstückig und bevorzugt materialeinheitlich mit dem Gehäuse ausgeführt.

In einer bevorzugten Ausführungsform ist der Sensorstutzen in einem Fortsatz des Gehäuses angeordnet, der sich am auslassseitigen Ende des Gehäuses radial außerhalb des Auslassstutzens in axialer Richtung von der Stirnseite des Gehäuses hinweg erstreckt, wobei der Anschlusskanal bohrungsartig innerhalb des Fortsatzes verläuft. Der Fortsatz ist weiter bevorzugt in Form einer Rippe ausgebildet, die radial vom Auslassstutzen aus gesehen nach außen verläuft. Dabei ist die Rippe bevorzugt ausgehend vom Auslassstutzen bezüglich der Stirnseite des Gehäuses insbesondere entlang des Anschlusskanals nach außen ansteigend ausgeführt. Somit kann der Anschlusskanal und der Sensorstutzen platzsparend in ein das Gehäuse im Bereich der Filterelementaufnahme verstärkendes Strukturelement wie die Rippe integriert werden. Dies ist auch bei der Herstellung des Gehäuses von Vorteil, wenn dieses im Kunststoffspritzgussverfahren hergestellt wird, da für das Einbringen der Anschlussschnittstelle und des Anschlusskanals nur ein einzelner, ggf. drehbarer Schieber erforderlich ist und der Anschlusskanal dennoch für die Druckmessung optimal im Fußpunkt des Auslassstutzens, d. h. dem Beginn des Auslassstutzens ausgehend vom stirnseitigen Ende des Filtergehäuseinnenraums beginnen kann. Die Integration in den bevorzugt rippenförmigen Fortsatz ermöglicht einen besonders stabilen Sensorstutzen, der auf die Anschlussschnittstelle aufgebrachte Scher- und Biegebeanspruchungen, beispielsweise durch äußere Krafteinwirkung auf einen angeschlossenen Wartungsindikator, Drucksensor o.ä. gut aufnehmen und ableiten kann.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines zweistufigen Filtersystems mit einem Zyklonabscheider nach einem Ausführungsbeispiel der Erfindung, dargestellt von der Seite des Auslassstutzens;
- Fig. 2: eine perspektivische Ansicht des Filtersystems von Fig. 1, dargestellt von der Deckelseite;
- Fig. 3: eine Detailansicht des Filtersystems von Fig. 1 mit Sicht auf den Sensorstutzen;
- Fig. 4: eine Sicht auf die Stirnseite des Filtersystems von Fig. 1;
- Fig. 5: eine Seitenansicht des Filtersystems von Fig. 1;
- Fig. 6: eine Seitenansicht des Filtersystem von Fig. 1 mit Sicht auf den Sensorstutzen mit montiertem Wartungsindikator; und
- Fig. 7: ein Längsschnitt durch das Filtersystem von Fig. 1 mit Schnitt durch den Sensorstutzen.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

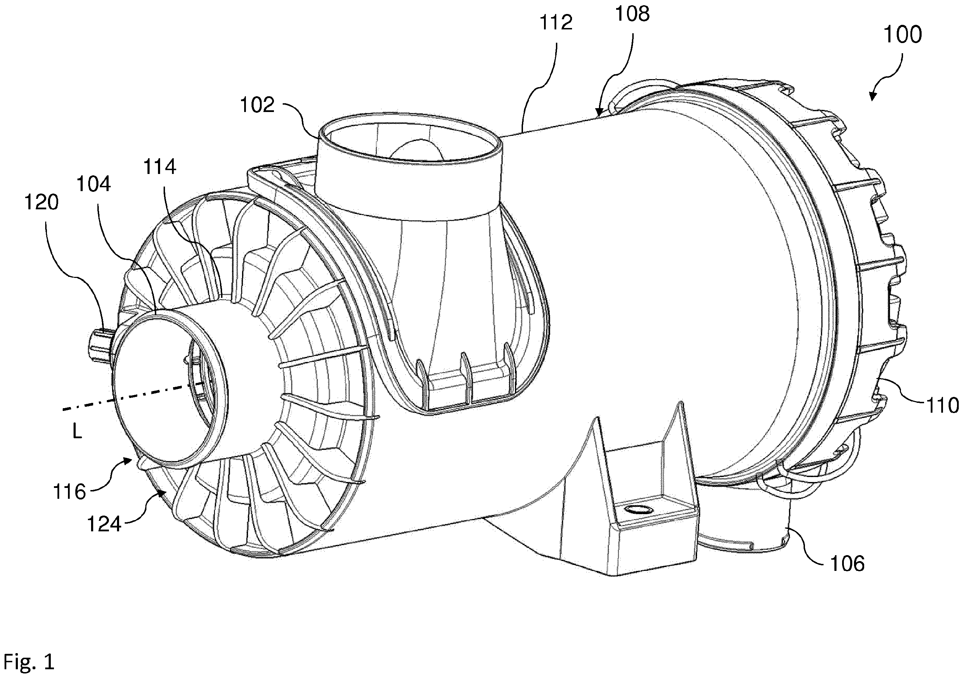

Figur 1 zeigt eine perspektivische Ansicht eines zweistufigen Filtersystems 100 mit einem Zyklonabscheider 36 nach einem Ausführungsbeispiel der Erfindung, dargestellt von der Seite des Auslassstutzens, mit tangentialem Einlass 102, zentrischem Auslass 104 an einer Gehäusestirnseite und bodenseitigem Schmutzauslass 106. Dargestellt ist eine Rundfilterbauform, die aus einem Gehäuse 108 besteht, das eine Gehäusewand 112 aufweist und mit einem Deckel 110, beispielsweise mit Schraub- oder Bajonettverschluss oder Schnapphaken, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Derartige Filtersysteme, wie in Figur 1 dargestellt, werden üblicherweise als Luft- und/oder Partikelfilter insbesondere für Brennkraftmaschinen im Baumaschinen- und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

Weiter zeigt Figur 1 einen am Gehäuse 108 an einer Stirnseite 124 angeordneten Sensorstutzen 120, wobei der Sensorstutzen 120 schräg zu einer Längsachse L des Gehäuses 108 in einem Endbereich 116 des Gehäuses 108, im gezeigten Ausführungsbeispiel an einer Stirnseite 124, angeordnet ist. Ein solcher Sensorstutzen 120 kann zum Anschluss eines Sensors als Wartungsindikator oder Wartungsintervallanzeige genutzt werden.

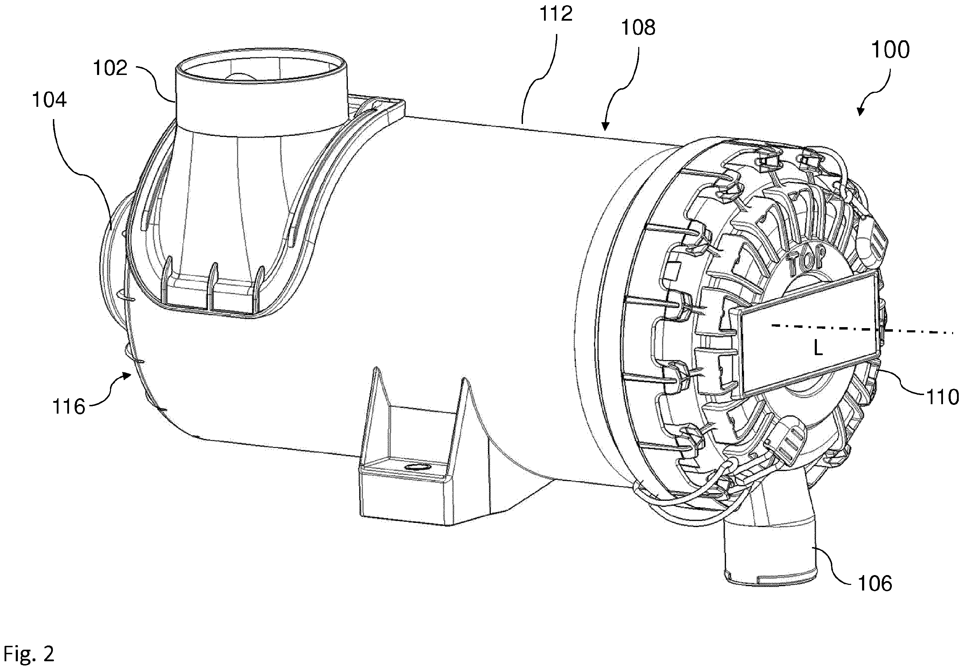

Figur 2 zeigt eine perspektivische Ansicht des Filtersystems 100 von Figur 1, dargestellt von der Deckelseite. Im Endbereich 116 des Filtersystems 100 ist der Auslassstutzen 104 zu erkennen, sowie der tangentiale Einlassstutzen 102. Das Gehäuse 108 mit seiner Gehäusewand 112 wird am anderen Ende des Filtersystems 100 durch den zu öffnenden Deckel 110 abgeschlossen, der den Schmutzauslass 106 zum Ausbringen der über den Zykloneffekt abgeschiedenen größeren Staubpartikel aufweist.

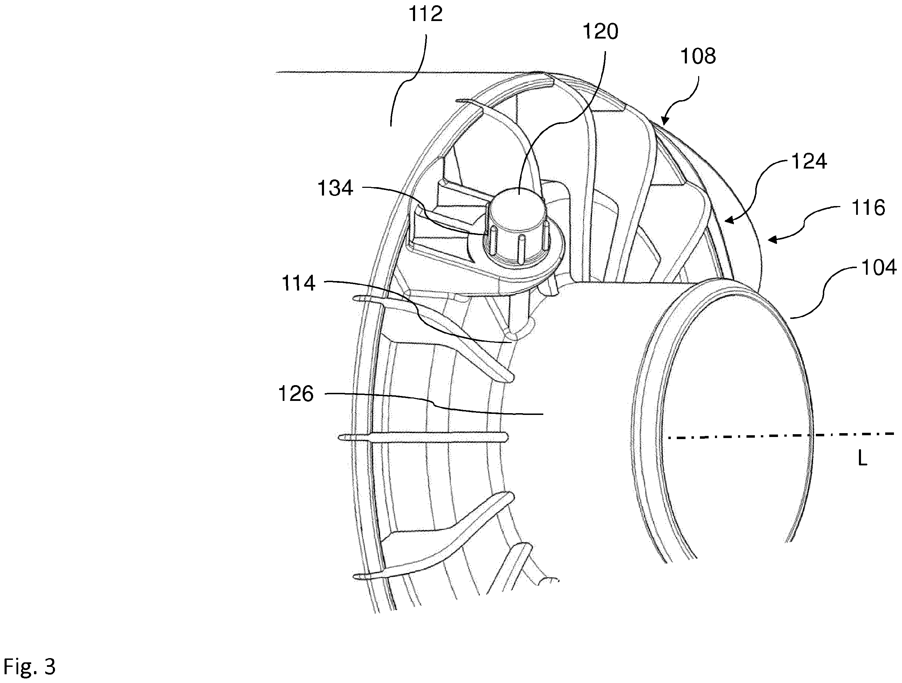

In Figur 3 ist eine Detailansicht des Filtersystems 100 von Figur 1 mit Sicht auf den Sensorstutzen 120 dargestellt. Der Auslassstutzen 104 ist konzentrisch zu der Längsachse L des Gehäuses 108 im Endbereich 116 des Gehäuses 108 an der Stirnseite 124 angeordnet. Der Sensorstutzen 120, benachbart zum Auslassstutzen 104 angeordnet, ragt schräg im Bereich zwischen der Stirnseite 124 und dem Auslassstutzen 104 in das Gehäuse 108 hinein und mündet in die Wand 126 des Auslassstutzens 104 an deren Fußpunkt 114. Am Ende des Sensorstutzens 120 ist ein Anschlussgewinde 134 zum Anschluss eines Sensors oder Wartungsindikators integriert. Besonders günstig kann der Sensorstutzen 120 mit dem Gehäuse 108 einstückig ausgeführt sein, sodass er mit dem Gehäuse 108 in einem Arbeitsgang herstellbar ist. Beispielsweise kann der Sensorstutzen 120 an das Gehäuse108 angespritzt sein.

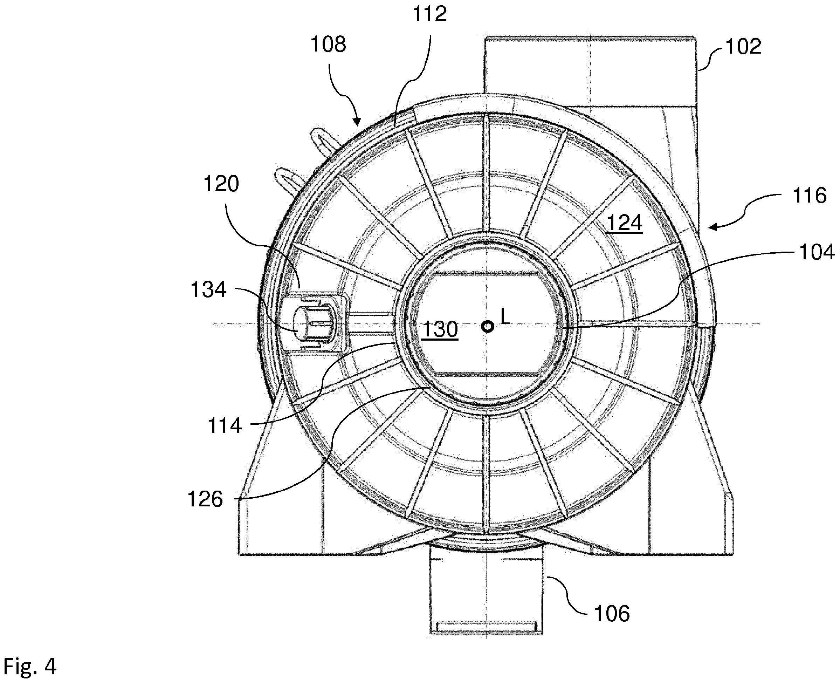

Figur 4 stellt eine Sicht auf die Stirnseite 124 des Filtersystems 100 von Figur 1 dar. In dieser Darstellung ist die radiale Anordnung des Sensorstutzens 120 in Richtung der Längsachse L zu erkennen. Der Sensorstutzen 120 mündet am Fußpunkt 114 des Auslassstutzens 104 in die Wand des Auslassstutzens 104 und damit in die Reinseite 130 des Filtersystems 100.

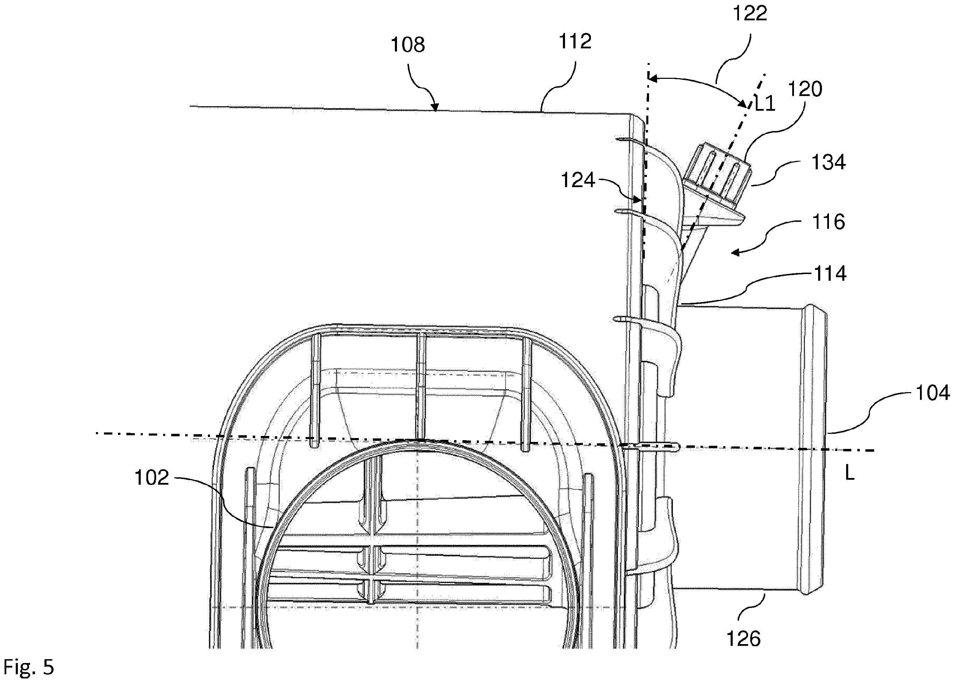

Figur 5 zeigt eine Seitenansicht auf das Filtersystem 100 von Figur 1 mit Sicht auf den Sensorstutzen 120. Der Sensorstutzen 120 ist schräg unter einem Winkel 122 zwischen 10° und 80°, bevorzugt zwischen 20° und 70°, besonders bevorzugt zwischen 30° und 60°, zu der Gehäusestirnseite 124 angeordnet, wobei der Winkel 122 zwischen einer Achse L1 des Sensorstutzens 120 und der Gehäusestirnseite 124 definiert ist. Auf diese Weise ist genügend Platz zur Montage eines Sensors, Wartungsindikators, Schlauches zu einem Unterdruckschalter oder einem Stecker zwischen Gehäusestirnseite 124 und dem Auslassstutzen 104 gegeben.

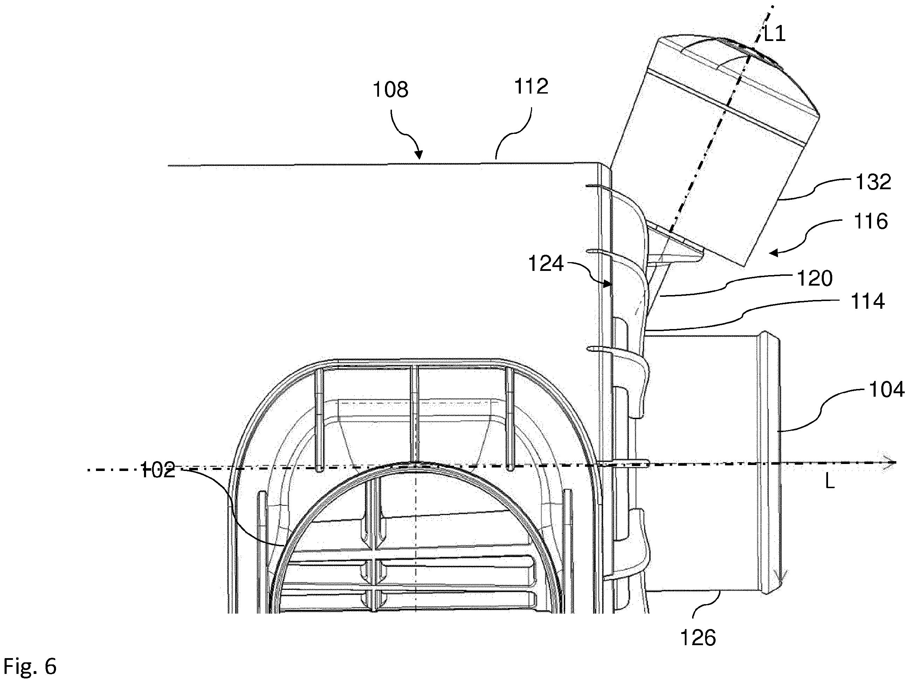

Figur 6 zeigt eine Seitenansicht auf das Filtersystem 100 von Figur 1 mit Sicht auf den Sensorstutzen 120 mit montiertem Wartungsindikator 132. Der Wartungsindikator 132 ragt in dem gezeigten Ausführungsbeispiel zwar über den Umfang des Gehäuses 108 des Filtersystems 100 hinaus, jedoch schließt er mit einer Ebene, die durch den oberen Rand des Auslassstutzens 104 gegeben ist, weitgehend ab. Das bedeutet, dass der Wartungsindikator den Bauraum einer Montagefläche für das Filtersystem 100 fast nicht tangiert und so bauraumgünstig an dem Filtersystem 100 angeordnet werden kann.

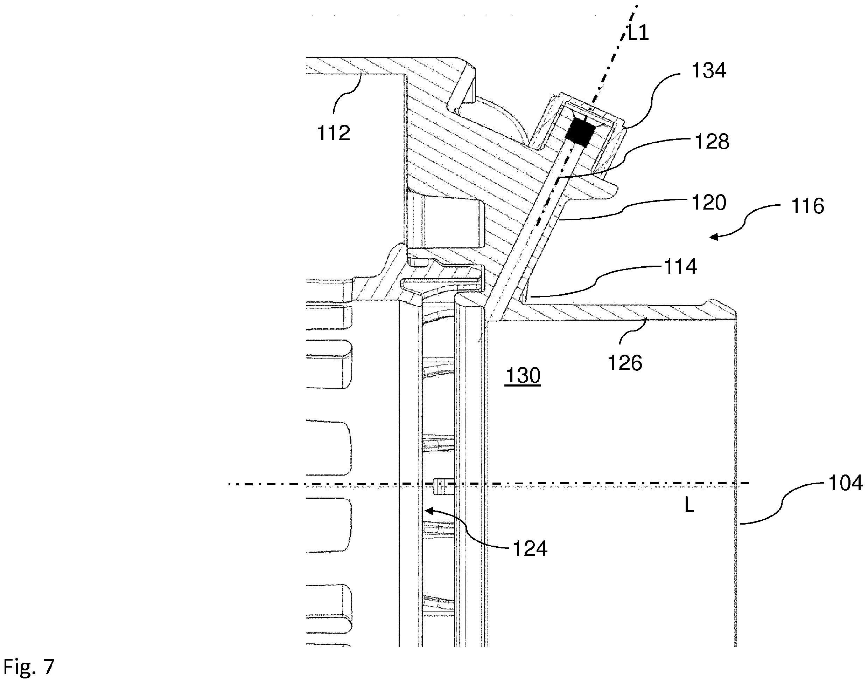

In Figur 7 ist ein Längsschnitt durch das Filtersystem 100 von Figur 1 mit Schnitt durch den Sensorstutzen 120 dargestellt. Man erkennt in Figur 7, dass der Anschlusskanal 128 auf diese Weise in den Fußpunkt 114 des Auslassstutzens 104 mündet, sodass der Druck zur Bestimmung eines Wartungsintervallzeitpunktes dadurch direkt auf der Reinseite 130 des Filtersystems 100 gemessen werden kann. Ferner ist erkennbar, dass der Sensorstutzen in einem Fortsatz des Gehäuses angeordnet ist, der sich am auslassseitigen Ende des Gehäuses 108 radial außerhalb des Auslassstutzens 104 in axialer Richtung von der Stirnseite 124 des Gehäuses hinweg erstreckt, wobei der Anschlusskanal 128 bohrungsartig innerhalb des Fortsatzes verläuft. Der Fortsatz ist dabei wie bevorzugt in Form einer Rippe ausgebildet, die radial vom Auslassstutzen 104 aus gesehen nach außen verläuft. Dabei ist die Rippe wie bevorzugt ausgehend vom Auslassstutzen 104 bezüglich der Stirnseite des Gehäuses insbesondere entlang des Anschlusskanals 128 nach außen ansteigend ausgeführt. Somit ist der Anschlusskanal 128 platzsparend in die Rippe integriert.

In alternativen Ausführungsformen (nicht dargestellt) kann der Sensorstutzen 120 direkt an dem Auslassstutzen 104 angeordnet sein. Auch ist denkbar, dass der Auslassstutzen 104 konzentrisch zu der Längsachse L angeordnet ist und der Sensorstutzen 120 lateral versetzt zu der Längsachse L angeordnet ist oder dass der Sensorstutzen 120 lateral versetzt zu einer Achse L1 des Auslassstutzens 104 in einer Wand 126 des Auslassstutzens 104 angeordnet ist. Diese Ausführungsformen können unter bestimmten Bauraumbedingungen vorteilhaft sein. Gerade beim Einbau solcher Filtersysteme 100 an Brennkraftmaschinen in den engen Bauräumen von Kraftfahrzeugen kann es günstig sein, auch nicht symmetrische Anordnungspositionen für den Sensorstutzen 120 zu wählen.

## Patentansprüche

1. Luftfiltersystem (100) für eine Brennkraftmaschine, umfassend
- ein Gehäuse (108) mit Gehäusewand (112) und wenigstens einem Deckel (110),
- einen am Gehäuse (108) angeordneten Einlassstutzen (102) zum Zuführen von zu filternder Luft,
- einen am Gehäuse (108) angeordneten Auslassstutzen (104) zur Ableitung der gefilterten Luft,
- einen am Gehäuse (108) angeordneten Sensorstutzen (120),
**dadurch gekennzeichnet, dass**
der Sensorstutzen (120) schräg zu einer Längsachse (L) des Gehäuses (108) in einem Endbereich (116) des Gehäuses (108) angeordnet ist und dass der Sensorstutzen (120) benachbart zum Auslassstutzen (104) angeordnet ist.

2. Luftfiltersystem nach Anspruch 1, wobei der Sensorstutzen (120) am Fußpunkt (114) des Auslassstutzens (104) angeordnet ist.

3. Luftfiltersystem nach einem der vorhergehenden Ansprüche, wobei der Sensorstutzen (120) an einer Gehäusestirnseite (124) angeordnet ist.

4. Luftfiltersystem nach einem der vorhergehenden Ansprüche, wobei der Sensorstutzen (120) unter einem Winkel (122) zwischen 10° und 80°, bevorzugt zwischen 20° und 70°, besonders bevorzugt zwischen 30° und 60°, zu der Gehäusestirnseite (124) angeordnet ist.

5. Luftfiltersystem nach einem der vorhergehenden Ansprüche 1 bis 4, wobei der Sensorstutzen (120) an dem Auslassstutzen (104) angeordnet ist.

6. Luftfiltersystem nach einem der vorhergehenden Ansprüche, wobei der Auslassstutzen (104) konzentrisch zu der Längsachse (L) angeordnet ist und der Sensorstutzen (120) lateral versetzt zu der Längsachse (L) angeordnet ist.

7. Luftfiltersystem nach einem der vorhergehenden Ansprüche, wobei der Sensorstutzen (120) lateral versetzt einer Achse (L1) des Auslassstutzens (104) in einer Wand (126) des Auslassstutzens (104) angeordnet ist.

8. Luftfiltersystem nach einem der vorhergehenden Ansprüche, umfassend einen Anschlusskanal (128) sowie eine außen am Filtergehäuse angeordnete Anschlussschnittstelle (134) zur Montage eines Wartungsindikators oder eines Drucksensors.

9. Luftfiltersystem nach einem der vorhergehenden Ansprüche, wobei ein Anschlusskanal (128) des Sensorstutzens (120) in eine Reinseite (130) des Luftfiltersystems mündet.

10. Luftfiltersystem nach einem der vorhergehenden Ansprüche, wobei der Sensorstutzen (120) mit dem Gehäuse (108) einstückig ausgeführt ist.

11. Luftfiltersystem nach Anspruch 9, wobei der Sensorstutzen in einem Fortsatz des Gehäuses (108) angeordnet ist, der sich am auslassseitigen Ende des Gehäuses (108) radial außerhalb des Auslassstutzens (104) in axialer Richtung von der Stirnseite (124) des Gehäuses (108) hinweg erstreckt.

12. Luftfiltersystem nach Anspruch 11, wobei der Fortsatz in Form einer Rippe, die radial vom Auslassstutzen (104) aus gesehen verläuft, gebildet ist, wobei die Rippe bevorzugt ausgehend vom Auslassstutzen (104) bezüglich der Stirnseite (124) insbesondere entlang des Anschlusskanals (128) nach außen ansteigt.

## Claims

1. Air filter system (100) for an internal combustion engine, comprising
- a housing (108) with housing wall (112) and at least one cover (110),
- an inlet port (102) disposed at the housing (108) for supplying air to be filtered,
- an outlet port (104) disposed at the housing (108) for discharging the filtered air,
- a sensor nozzle (120) disposed at the housing (108),
**characterized in that**
the sensor nozzle (120) is inclined in relation to a longitudinal axis (L) of the housing (108) in an end portion (116) of the housing (108) and that the sensor nozzle (120) is adjacent to the outlet port (104).

2. Air filter system according to claim 1, wherein the sensor nozzle (120) is disposed at the base (114) of the outlet port (104).

3. Air filter system according to one of the above claims, wherein the sensor nozzle (120) is disposed at a housing front side (124).

4. Air filter system according to one of the above claims, wherein the sensor nozzle (120) is disposed under an angle (122) between 10° and 80°, preferably between 20° and 70°, particularly preferably between 30° and 60° with regard to the housing front side (124).

5. Air filter system according to one of the above claims 1 to 4, wherein the sensor nozzle (120) is disposed at the outlet port (104).

6. Air filter system according to one of the above claims, wherein the outlet port (104) is disposed concentrically in relation to the longitudinal axis (L) and the sensor nozzle (120) is laterally offset in relation to the longitudinal axis (L).

7. Air filter system according to one of the above claims, wherein the sensor nozzle (120) is laterally offset in relation to an axis (L1) of the outlet port (104) in a wall (126) of the outlet port (104).

8. Air filter system according to one of the above claims, comprising a connecting channel (128) as well as a connection interface (134) disposed outside at the filter housing for mounting a maintenance indicator or a pressure sensor.

9. Air filter system according to one of the above claims, wherein a connecting channel (128) of the sensor nozzle (120) opens into a clean side (130) of the air filter system.

10. Air filter system according to one of the above claims, wherein the sensor nozzle (120) is made in one piece with the housing (108).

11. Air filter system according to claim 9, wherein the sensor nozzle is disposed in an extension of the housing (108) which extends radially outside the outlet port (104) at the outlet-sided end of the housing (108) in axial direction from the front side (124) of the housing (108).

12. Air filter system according to claim 11, wherein the extension is formed in the shape of a rib extending radially from the outlet port (104), wherein the rib preferably rises outwardly from the outlet nozzle (104) with respect to the front side (124) in particular along the connecting channel (128).

## Revendications

1. Système de filtre à air (100) pour un moteur à combustion interne, comprenant
- un boîtier (108) avec une paroi de boîtier (112) et au moins un couvercle (110),
- une tubulure d'entrée (102) disposée sur le boîtier (108) et destinée à introduire de l'air à filtrer,
- une tubulure de sortie (104) disposée sur le boîtier (108) et destinée à évacuer l'air filtré,
- une tubulure de capteur (120) disposée sur le boîtier (108),
**caractérisé en ce que**
la tubulure de capteur (120) est disposée de manière inclinée par rapport à un axe longitudinal (L) du boîtier (108) dans une section d'extrémité (116) du boîtier (108) et que la tubulure de capteur (120) est disposée à proximité de la tubulure de sortie (104).

2. Système de filtre à air selon la revendication 1, la tubulure de capteur (120) étant disposée sur la base (114) de la tubulure de sortie (104).

3. Système de filtre à air selon l'une des revendications précédentes, la tubulure de capteur (120) étant disposée sur une face frontale du boîtier (124).

4. Système de filtre à air selon l'une des revendications précédentes, la tubulure de capteur (120) étant disposée sous un angle (122) entre 10° et 80°, de préférence entre 20° et 70°, de façon particulièrement préférée entre 30° et 60°, par rapport à la face frontale du boîtier (124).

5. Système de filtre à air selon l'une des revendications 1 à 4, la tubulure de capteur (120) étant disposée sur la tubulure de sortie (104).

6. Système de filtre à air selon l'une des revendications précédentes, la tubulure de sortie (104) étant disposée de manière concentrique par rapport à l'axe longitudinal (L) et la tubulure de capteur (120) étant décalée latéralement par rapport à l'axe longitudinal (L).

7. Système de filtre à air selon l'une des revendications précédentes, la tubulure de capteur (120) étant décalée latéralement par rapport à un axe (L1) de la tubulure de sortie (104) dans une paroi (126) de la tubulure de sortie (104).

8. Système de filtre à air selon l'une des revendications précédentes, comprenant un canal de raccordement (128) ainsi qu'une interface de raccordement (134) disposée à l'extérieur sur le boîtier de filtre pour monter un indicateur de maintenance ou un capteur de pression.

9. Système de filtre à air selon l'une des revendications précédentes, un canal de raccordement (128) de la tubulure de capteur (120) débouchant dans un côté pur (130) du système de filtre à air.

10. Système de filtre à air selon l'une des revendications précédentes, la tubulure de capteur (120) étant réalisée en un bloc avec le boîtier (108).

11. Système de filtre à air selon la revendication 9, la tubulure de capteur étant disposée dans un prolongement du boîtier (108) qui s'étend à l'extrémité côté sortie du boîtier (108) radialement à l'extérieur de la tubulure de sortie (104) en direction axiale à partir de la face frontale (124) du boîtier (108).

12. Système de filtre à air selon la revendication 11, le prolongement étant réalisé en forme d'une nervure qui s'étend radialement à partir de la tubulure de sortie (104), la nervure montant de préférence vers l'extérieur à partir de la tubulure de sortie (104) par rapport à la face frontale (124), en particulier le long du canal de raccordement (128).
